(19) Europäisches Patentamt

European Patent Office

Office européen des brevets

(11) **EP 2 068 566 A2**

(12) **EUROPEAN PATENT APPLICATION**

(43) Date of publication:
**10.06.2009 Bulletin 2009/24**

(51) Int Cl.:
*H04N 7/26* (2006.01)    *G06T 1/00* (2006.01)

(21) Application number: **08020300.3**

(22) Date of filing: **21.11.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Chen, Xuemin**<br>  **92129 San Diego (US)**<br>• **Rodgers, Stephane**<br>  **92115 San Diego (US)** |
| (30) Priority: **07.12.2007 US 952789** | (74) Representative: **Jehle, Volker Armin**<br>**Bosch Jehle**<br>**Patentanwaltsgesellschaft mbH**<br>**Flüggenstrasse 13** |
| (71) Applicant: **Broadcom Corporation**<br>**Irvine 92617 (US)** | **80639 München (DE)** |

(54) **A method and system for secure watermark embedding and extraction data flow architecture**

(57)    Methods and systems for secure watermark embedding and extraction data flow architecture are disclosed and may include embedding a watermark in a video signal utilizing an embedded CPU. The embedded CPU may be controlled utilizing a security processor via a secure bus. The watermark may be embedded in a compressed video signal that may be diverted around a compression/decompression engine. The watermark may be embedded in a decompressed video signal and may be directed through a compression/decompression engine. Requests may be sent to the embedded CPU from the main CPU via the security processor and the secure bus. The watermark may be encrypted utilizing the security processor. The secure bus may be inaccessible to the main CPU or any device not on the chip. The chip may be disabled when the embedded CPU may be disabled. Sections of the video signal may be classified and selected for embedding.

FIG. 2

## Description

CROSS-REFERENCE TO RELATED APPLICATIONS/ INCORPORATION BY REFERENCE

[Not Applicable]

FEDERALLY SPONSORED RESEARCH OR DEVELOPMENT

[Not Applicable]

[MICROFICHE/COPYRIGHT REFERENCE]

[Not Applicable]

FIELD OF THE INVENTION

Certain embodiments of the invention relate to digital media processing. More specifically, certain embodiments of the invention relate to a method and system for secure watermark insertion and extraction in the compressed video domain.

BACKGROUND OF THE INVENTION

Watermarking is a technique utilized to protect digital media from unauthorized use or illegal copying, such as with copyrighted material, for example. Watermarking of digital media may fall into two categories: visible or invisible. Visible watermarks are typically added to digital images to indicate ownership and to thwart unauthorized use of the images. The watermark may comprise the identity of the owner and/or a copyright symbol and date, for example. This type of watermark may be considered a spatial watermark in that the data is embedded spatially in an image, and the watermark signal is distinct from the original image data. Spatial watermarks may not be robust against attacks due to the ability of filtering, removing and/or cropping the data.

Invisible watermarks do not change the image to a perceptible extent. This may be accomplished by minor changes in the least significant bits of the original data. Watermarks that are unknown to the end user may be considered steganographic.

A watermarking process may embed the data in the frequency domain, making it more robust against attack. The technique is similar to spread spectrum encoding in communications, where the data to be embedded may be spread over a multitude of frequencies by modulating the watermark signal with pseudo-noise before adding it to the original data. The low signal amplitude, due to the watermark being invisible, the large bandwidth of the original data (image or video, for example), and the shortness of the watermark message, are all factors that indicate spread spectrum encoding is a logical choice.

In addition to embedding a watermark in digital multimedia data, detecting whether a watermark is present may also be important in the protection of multimedia data. Multimedia players may include watermark sensing electronics to preclude the use of unauthorized or pirated media.

Further limitations and disadvantages of conventional and traditional approaches will become apparent to one of skill in the art, through comparison of such systems with the present invention as set forth in the remainder of the present application with reference to the drawings.

BRIEF SUMMARY OF THE INVENTION

A system and/or method for secure watermark embedding and extraction data flow architecture, substantially as shown in and/or described in connection with at least one of the figures, as set forth more completely in the claims.

According to an aspect, a method for digital media processing is provided, the method comprising:

in a watermark system chip comprising a main CPU, an embedded CPU and a security processor:

embedding a watermark in a video signal utilizing said embedded CPU; and

controlling said embedded CPU utilizing said security processor via a secure bus.

Advantageously, the method further comprises embedding said watermark in a compressed video signal.

Advantageously, the method further comprises diverting said watermarked compressed video signal around a compression/decompression engine.

Advantageously, the method further comprises embedding said watermark in a decompressed video signal.

Advantageously, the method further comprises directing said watermarked decompressed video signal through a compression/decompression engine.

Advantageously, the method further comprises sending requests to said embedded CPU from said main CPU via said security processor and said secure bus.

Advantageously, the method further comprises encrypting said watermark utilizing said security processor.

Advantageously, said secure bus is inaccessible to said main CPU or any device not on said chip.

Advantageously, the method further comprises disabling said chip when said embedded CPU is disabled.

Advantageously, the method further comprises classifying and selecting sections of said video signal for said embedding of said watermark.

According to an aspect, a system for digital media processing comprises:

a watermark system chip comprising a main CPU, an embedded CPU and a security processor;

said embedded CPU embeds a watermark in a video signal; and

said security processor controls said embedded CPU via a secure bus.

Advantageously, said watermark system chip embeds said watermark in a compressed video signal.

Advantageously, said watermark system chip diverts said watermarked compressed video signal around a compression/decompression engine.

Advantageously, said watermark system chip embeds said watermark in a decompressed video signal.

Advantageously, said watermark system chip directs said watermarked decompressed video signal through a compression/decompression engine.

Advantageously, said watermark system chip sends requests to said embedded CPU from said main CPU via said security processor and said secure bus.

Advantageously, said watermark system chip encrypts said watermark utilizing said security processor.

Advantageously, said secure bus is inaccessible to said main CPU or any device not on said chip.

Advantageously, said watermark system chip disables said chip when said embedded CPU is disabled.

Advantageously, said watermark system chip classifies and selects sections of said video signal for said embedding of said watermark.

Various advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1 is an exemplary application of a digital watermarking process, in accordance with an embodiment of the invention.

FIG. 2 is a block diagram illustrating an exemplary watermark embedding and video compression/encoding system, in accordance with an embodiment of the invention.

FIG. 3 is an exemplary watermark extraction system, in accordance with an embodiment of the invention

FIG. 4 is a block diagram of an exemplary watermark insertion and extraction implementation, in accordance with an embodiment of the invention.

FIG. 5 is a block diagram illustrating an exemplary watermark embedder, in accordance with an embodiment of the invention.

FIG. 6 is a block diagram of an exemplary watermark extractor, in accordance with an embodiment of the invention.

FIG. 7 is a flow diagram of an exemplary watermarking embedding process, in accordance with an embodiment of the invention.

DETAILED DESCRIPTION OF THE INVENTION

Certain aspects of the invention may be found in a method and system for secure watermark embedding and extraction data flow architecture. Exemplary aspects of the invention may comprise embedding a watermark in a video signal utilizing a CPU embedded within a chip (embedded CPU). The embedded CPU may be controlled utilizing a security processor via a secure bus. The security processor and a main CPU may be integrated within the chip. The watermark may be embedded in a compressed video signal that may be diverted around a compression/decompression engine. The watermark may be embedded in a decompressed video signal and may be directed through a compression/decompression engine. Requests may be sent to the embedded CPU from a main CPU via the security processor and the secure bus. The watermark may be encrypted utilizing the security processor. The secure bus may be inaccessible to the main CPU or any device not on the chip. The chip may be disabled in instances when the embedded CPU may be disabled. Sections of the video signal may be classified and selected for embedding of the watermark based on the classification.

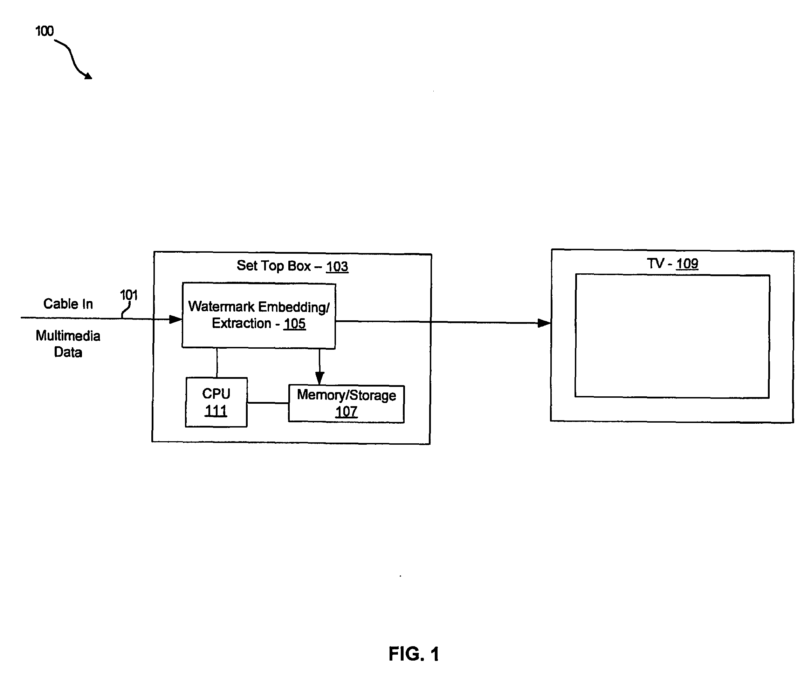

FIG. 1 is an exemplary application of a digital watermarking process, in accordance with an embodiment of the invention. Referring to FIG. 1, there is shown watermark embedding and extraction application 100 comprising a cable input 101, a television 109 and a set top box 103 comprising a watermark embedding/extraction block 105, a memory/storage 107 and a CPU 111. The cable input 101 may communicate multimedia signals comprising audio, video, data and/or voice, for example.

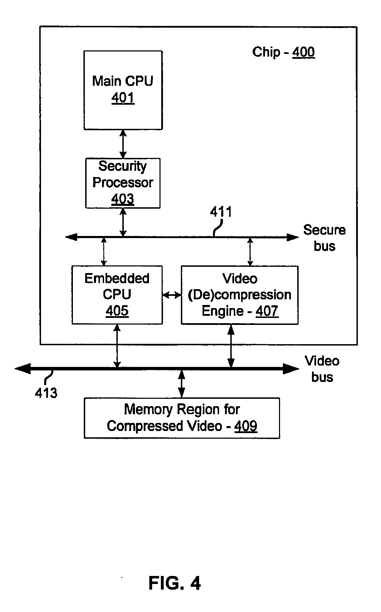

The set top box 103 may comprise suitable circuitry, logic and/or code for receiving multimedia input signals and generating an output signal that may be displayed on the television 109. The memory/storage 107 may comprise suitable circuitry, logic and/or code for storing multimedia data received from the cable input 101 that may have been processed by the watermark embedding/extraction block 105. The memory/storage 107 may also be enabled to store data that may be utilized by the CPU 111 for controlling various aspects of operation of the set top box 103. The CPU 111 may also be enabled to control certain aspects of the watermark/embedding extraction block 105, except for secure operations that may be controlled by an on-chip embedded CPU, as described with respect to FIG. 4. Although a cable input 101 is shown, the invention is not so limited. Accordingly, other media inputs such as, for example, a satellite feed may be provided as an input to the set top box 103.

The watermark embedding/extraction block 105 may comprise suitable circuitry, logic and/or code for receiving multimedia data from, for example, the cable input 101 and embedding or extracting a digital watermark in the data. The digital watermark may comprise encrypted data regarding the source of the multimedia data and/or the set top box 103 such that should the data later be discovered as pirated, the source of the pirated data may be determined, for example. In an embodiment of the invention, the watermark embedding may be performed on compressed multimedia data. Once the multimedia data may be encrypted, the resulting messages in the encrypted multimedia data may only be detected with appropriate watermark detection circuitry.

In operation, multimedia data may be communicated to the set top box 103 via the cable input 101. In instances where it may be desired that the multimedia data be protected from illegal copying or use, for example, such as with copyrighted material, the watermark embedding/extraction block 105 may embed a watermark in compressed multimedia data before storing in the storage 107 and/or decompressing the data and communicating to the television 109. The watermark embedding/extraction block 105 may embed a watermark on previously compressed data or may encode the data after embedding a watermark, for example. The watermark embedding/extraction block 105 may also extract the watermark data from the watermarked video data to verify the watermarking process.

The watermarking process may be performed by an embedded processor such that external control of the embedding process may be excluded, enhancing security of the set top box 103. The embedded CPU 405 may only receive requests from an on-chip security processor 403 that may receive requests from a main CPU, as described further with respect to FIG. 4.

Watermark embedding may be considered as a function that involves the original media (content) data $\vec{V}$, an embedding key $\vec{K}$, a set of parameters $\vec{P}$ that control the embedding procedure/algorithm, and a message $\vec{M}$ that may be embedded in the video and/or audio. The message data $\vec{M}$ may be considered as a sequence of bits. The set of parameters $\vec{P}$ may contain, among other things, the so-called watermark embedding factor, i.e. a parameter that controls the amount of degradation that may be inflicted on the original media data by the watermark. The output of the watermark embedding function comprise watermarked data $\vec{W}$. Thus, the watermark embedding function may be of the following form:

$$\vec{W} = \vec{f}\left(\vec{V}, \vec{K}, \vec{M}, \vec{P}\right).$$

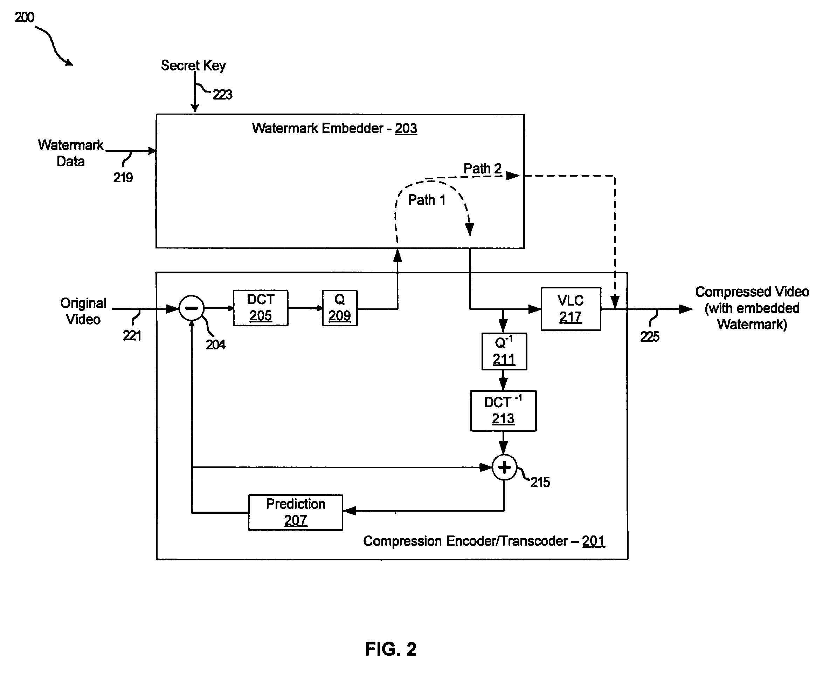

FIG. 2 is a block diagram illustrating an exemplary watermark embedding and video compression/encoding system, in accordance with an embodiment of the invention. Referring to FIG. 2, there is shown a video compression encoder/transcoder 201 and a watermark embedder 203. There is also shown a watermark data signal 219, an original video signal 221 and a compressed and watermarked video signal 225.

The video compression encoder/transcoder 201 may comprise a subtractor 204, a discrete cosine transform (DCT) block 205, a motion-compensated interframe prediction (MCP) block 207, a quantizer 209, an inverse quantizer 211, an inverse DCT block 213, an adder 215 and a variable length code (VLC) block 217. In an embodiment of the invention, the compression encoder/transcoder 201 may comprise an MPEG-2 compression standard.

The subtractor 204 may comprise suitable circuitry, logic and/or code that may enable subtracting an input signal from another input signal. The subtractor 204 may be utilized to subtract a prediction error signal from an input signal, for example. The subtractor 204 may generate an output signal that may be communicatively coupled to the DCT block 205.

The DCT block 205 may comprise suitable circuitry, logic and/or code that may enable transforming an input signal using a discrete cosine transform. The DCT transform may be performed on a block of data at a time and may generate a block of data comprising DCT coefficients that may indicate the frequency coefficients of the pixels in the original image data.

The quantizer 209 may comprise suitable circuitry, logic and/or code that may enable reducing the required number of bits defining a sampled signal, thus reducing the number of bits to be transmitted and increasing throughput. The amount of bit reduction may depend on the image quality requirements of the application and data storage capacity, for example.

The inverse quantizer 211 may comprise suitable circuitry, logic and/or code that may enable the inverse function of the quantizing process of the quantizer 209. In this manner, a close approximation of the original output of the DCT block 205 may be generated. The inverse quantizer 211 may increase the number of bits defining a signal, and may generate an output signal that may be communicated to the inverse DCT block 213.

The inverse DCT block 213 may comprise suitable circuitry, logic and/or code that may enable the inverse DCT process that may generate an approximation of the original signal generated by the subtractor 204. The inverse DCT block 213 may generate an output signal that may be communicated to the adder 215.

The adder 215 may comprise suitable circuitry, logic and/or code that may enable generating an output signal that may be the sum of the input signals. The adder 215 may receive as inputs, the output signal generated by the inverse DCT block 213 and the output signal generated by the MCP block 207.

The MCP block 207 may comprise suitable circuitry, logic and/or code that may enable predicting a next image frame based on a prior image frame. The MCP block 207 may receive as an input the signal generated by the adder 215, and may generate an output signal that may be communicated to the subtractor 204 and the adder 215. The output signal of the MCP block 207 may comprise a prediction error image, which may be subtracted from the original video signal 221 by the subtractor 204.

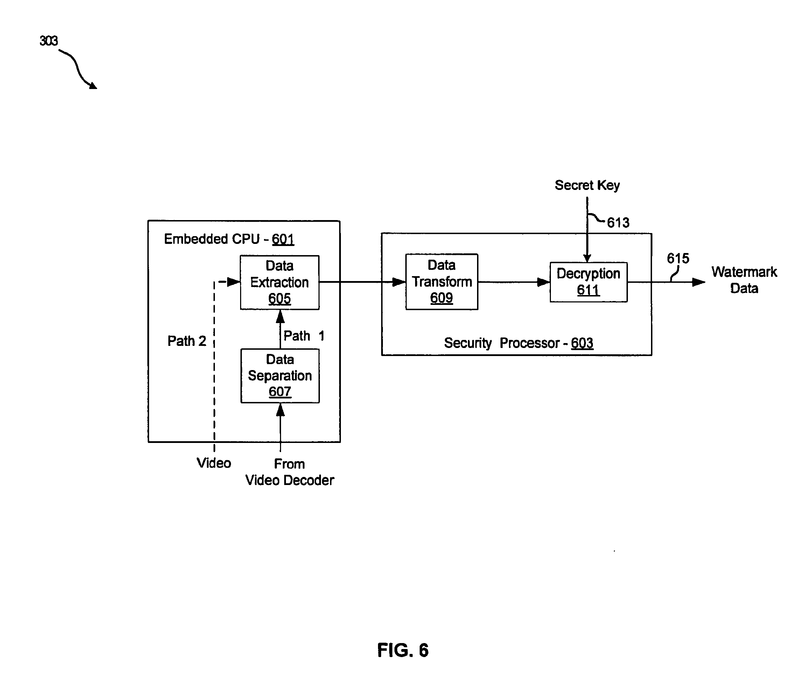

The watermark embedder 203 may comprise suitable circuitry, logic and/or code that may enable embedding a watermark in received video data. The watermark embedder 203 may receive as inputs, the watermark signal 219, a secret key 223 and video data from the compression encoder/transcoder 201. The watermark embedder 203 may be described further with respect to FIG. 6. The secret key 223 may comprise information that may be utilized to identify a specific set top box, such as the set top box 103 utilized to receive video data. In this manner, the source of pirated video data may be identified, for example.

In operation, an original video signal 221 may be communicated to the subtractor 204, where the prediction error image generated by the MCP block 207 may be subtracted. The resulting signal may be communicated to the DCT block 205, which may communicate the output signal to the quantizer 209. The resulting quantized signal may be communicated to the watermark embedder 203 where a watermark may be embedded into the data. The watermark may comprise information about the set-top box, such as recording and storage privileges, set top box location and identification, for example.

In an embodiment of the invention, in instances where the original video signal 221 may comprise uncompressed data, the watermarked data may be communicated back to the compression encoder/transcoder 201 for compression by the VLC block 217. In this manner, the watermarked signal generated by the watermark embedder 203 may then be compressed, which may generate the compressed and watermarked video signal 225. This embodiment is illustrated by Path 1 in FIG. 2, where the watermark may be inserted in the quantized data domain.

In another embodiment of the invention, in instances where the original video signal 221 may be compressed, the watermarked data may be communicated to the compression encoder/transcoder 201 after the VLC block 217, since the signal may already be compressed, thus generating the compressed and watermarked video signal 225. This embodiment is illustrated by Path 2 in FIG. 2, where the watermark may be inserted into the compressed data and communicated to the output of the compression encoder/transcoder. Thus the watermark embedder 203 may be capable of handling data in the compressed or uncompressed domain.

The watermark embedder 203 may also communicate the watermarked data to the inverse quantizer 211, which may increase the number of bits of the data and communicate this signal to the inverse DCT block 213. The inverse DCT block 213 may communicate an inverse discrete cosine transformed signal to the adder 215. The adder 203 may sum the signals from the inverse DCT block 213 and the MCP block 207 and generate an output signal that may be communicated to the MCP block 207. The MCP block 207 may generate a prediction error image that may be subtracted from the original video signal 221. In this manner, the error in the compressed and watermarked video signal 225 may be minimized.

The compression encoder/transcoder 201 in FIG. 2 is not limited to MPEG-2 format. Accordingly, any compression standard may be utilized to communicate with the watermark embedder 201, such as H. 264/MPEG-4 AVC or non-standard codec, for example.

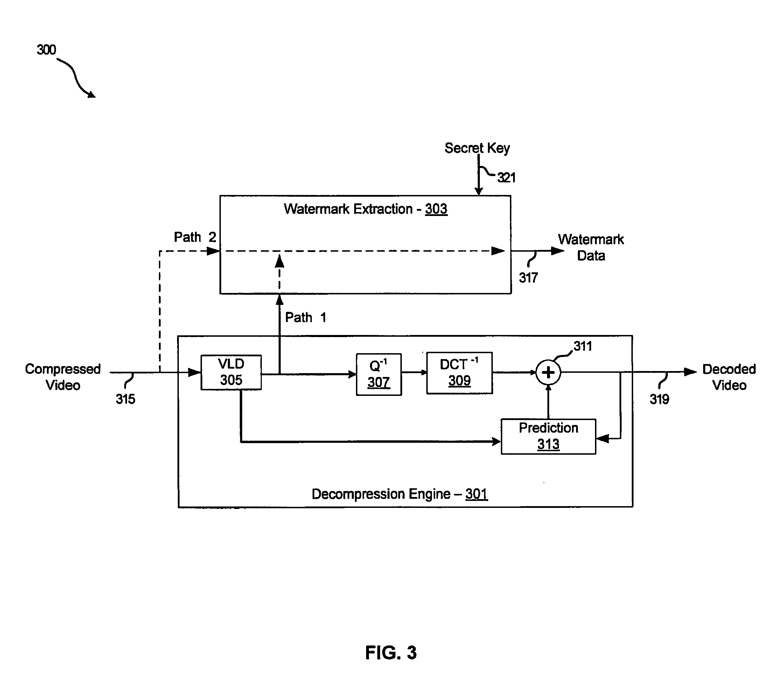

FIG. 3 is an exemplary watermark extraction system, in accordance with an embodiment of the invention. Referring to FIG. 3, there is shown a watermark extraction system 300 comprising a decompression engine 301 and a watermark extraction block 303. There is also shown a compressed and watermarked signal 315, a watermark data signal 317, a decoded video signal 319 and a secret key 321. Secure watermark extraction may be performed for watermark verification and/or debugging, for example.

The decompression engine 301 may comprise a variable length decode (VLD) block 305, an inverse quantizer 307, an inverse DCT block 309, an adder 311 and a MCP block 313. The inverse quantizer 307, the inverse DCT block 309, the adder 311 and the MCP block 313 may be substantially similar to the inverse quantizer 211, the inverse DCT block 213, the adder 215 and the MCP block 207 described with respect to FIG. 2.

The VLD block 305 may comprise suitable circuitry, logic and/or code that may enable decoding a received signal, and may comprise an inverse function of the VLC block 217, described with respect to FIG. 2. The VLD block 305 may receive as an input the compressed video signal 315, and may communicate an output signal to the inverse quantizer 307 and the watermark extraction block 303.

The watermark extraction block 303 may comprise suitable circuitry, logic and/or code that may enable the extraction of a watermark signal from a received signal. The watermark extraction block 303 may receive as inputs, a video signal, either Path 1 or Path 2 in FIG. 3 and a secret key 321. The secret key 321 may be substantially similar to the secret key 223, described with respect to FIG. 2, and may be utilized to verify that the set top box, such as the set top box 103, may be authorized to extract the watermark data 317. The watermark extraction block 303 may be described further with respect to FIG. 6.

In operation, the compressed video signal 315 may be communicated to the VLD block 305, for Path 1 in FIG. 3, in instances where a watermark may have been embedded in the data prior to encoding, corresponding to Path 1 in FIG. 2. In another embodiment of the invention, the received data may be communicated directly to the watermark extraction block 303, for Path 2 in FIG. 3, in instances where a watermark may have been embedded in an encoded stream, corresponding to Path 2 in FIG. 2. The watermark extraction block 303 may then generate an output signal, the watermark signal 317.

The received compressed video signal 315 may be decoded by the VLD block 305, which may communicate the decoded signal to the inverse quantizer block 307 and the MCP block 313. The decompression engine 301 may generate the decoded video signal 319 by adding the predicted error image generated by the MCP block 313 to the output signal generated by the inverse DCT block 309.

FIG. 4 is a block diagram of an exemplary watermark insertion and extraction implementation, in accordance with an embodiment of the invention. Referring to FIG. 4, there is shown a chip 400 comprising a main CPU 401, a security processor 403, an embedded CPU 405, a video compression/decompression engine 407 and a secure bus 411. There is also shown a compressed video memory region 409 and a video bus 413.

The main CPU 401 may comprise suitable circuitry, logic and/or code that may enable overall functional control of the set top box 103. For example, the main CPU 401 may be utilized to update and/or modify programmable parameters and/or values in a plurality of components, devices, and/or processing elements in the set top box 103, described with respect to FIG. 1. The main CPU 401 may be enabled to execute code from external sources or third parties, and may not be able to directly access or control the embedded CPU 405 and/or the watermark embedding process. The main CPU 401 may only communicate requests to the embedded CPU 405 via the security processor 403 which may only allow specific commands to pass as defined by trusted code stored within the chip 400.

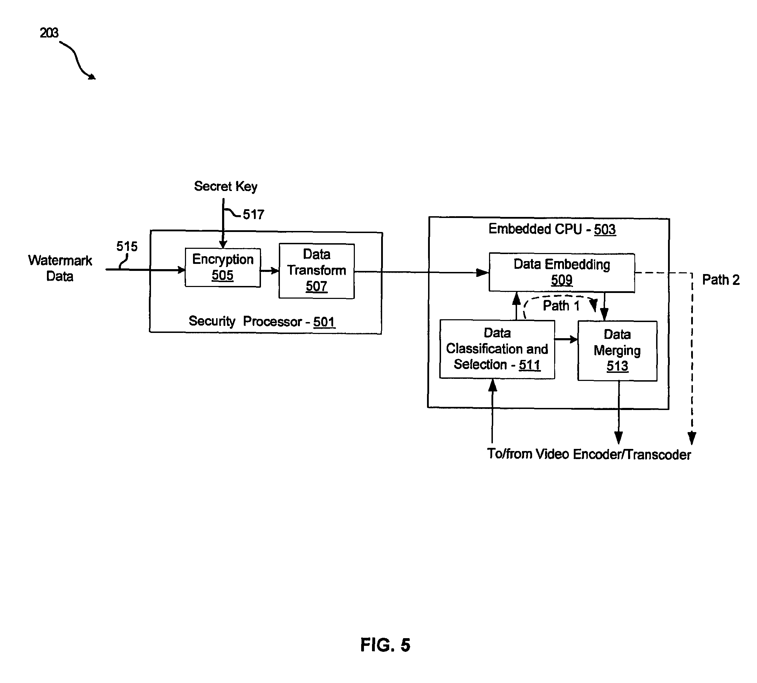

The embedded CPU 405 may comprise suitable circuitry, logic and/or code that may enable control of the watermark embedding process. The embedded CPU 405 may be entirely separate from the main CPU 401, in that it may only utilize trusted code, which may comprise hashed code stored locally on the chip 400. In this manner, software code from third parties, or hackers, may not affect the watermark embedding process. The watermark embedding process of the embedded CPU 415 is described further with respect to FIG. 5.

The security processor 403 may comprise suitable circuitry, logic and/or code that may enable secure interaction between the main CPU 401 and the secure bus 411. Since the main CPU 401 may utilize software code from external sources and unknown users, the security processor 403 may enable only allowed or authorized processes to be communicated to the secure bus 411.

The video compression/decompression engine 407 may comprise suitable circuitry, logic and/or code that may enable video compression and decompression for storage and/or retrieval, respectively, from the compressed video memory region 409. The video compression/decompression engine 407 may be controlled exclusively by the embedded CPU 405, reducing and/or eliminating the ability of an outside processor from controlling secure processes, greatly enhancing security.

The secure bus 411 may comprise a communication bus that may be enabled to communicate secure commands between the security processor 403 and the embedded CPU 405 and the video compression/decompression engine 407. The video bus 413 may comprise a communication bus that may enable the communication of compressed video data between the compressed video memory region 409 and the video compression/decompression engine 407. In addition, the embedded CPU 405 may access the compressed video memory region 409 via the video bus 413.

In operation, a video signal may be received via the video bus 413. The embedded CPU 405 may insert a watermark before the data may be compressed by the compression/decompression engine 407 and stored in the compressed video memory region 409. The embedded CPU 405 may be controlled by the security processor 403, both of which may operate on trusted code, which may comprise code stored locally and thus not accessible by the main CPU 401 or any external source, thus increasing the security of the system. The embedded CPU 405 may receive control signals from the security processor 403 via the secure bus 411.

The trusted code may be signed using a trusted private key to exclude external hacking of the embedded CPU 405 or the security processor 403, and may be stored on-chip or in a secure memory such as a hashed or locked memory. The embedded CPU 405 may generate and insert a watermark to be embedded in the video data received via the video bus 413. Accordingly, the compression/decompression engine 407 may be controlled by the embedded CPU 405 and/or the security processor 403.

Watermark encryption may be performed by the security processor 403 in instances where encryption of the watermark may be desired. The main CPU 401 may initiate the watermark insertion by the embedded CPU 405 via the security processor 403. The embedded CPU 405 may perform functions critical to the set top box 103, described with respect to FIG. 1. In this manner, in instances where a hacker may attempt to disable the embedded CPU 405, the set top box 103 may be disabled. In addition, the main CPU 401 may generate host signals to be communicated to the embedded CPU 405 via the security processor 403 and the secure bus 411. The security processor 403 may ensure that only specific allowed commands be communicated to the embedded CPU 405.

Control functions for the embedded processor may only be set by the security processor 403 and may comprise firmware that may not be accessed by the main CPU 401 or any external device or system. In this manner, the watermarking process may be protected from attack by hackers.

In an embodiment of the invention, software code that may be executed on the embedded CPU 405 may be signed and verified before being downloaded from memory, such as from a flash memory. The signature verification may correspond to set top box 103 specific information to verify that code to be executed on the embedded CPU 405 may be legitimate and authorized for the set top box 103.

The video compression/decompression engine 407 may enable decompression of compressed video data stored in the compressed video memory region 409 prior to communication to a display, such as the television 109, via the video bus 413.

FIG. 5 is a block diagram illustrating an exemplary watermark embedder, in accordance with an embodiment of the invention. Referring to FIG. 5, there is shown a security processor 501 and an embedded CPU 503. There is also shown watermark data 515 and a secret key 517.

The security processor 501 may comprise an encryption block 505 and a data transform block 507. The encryption block 505 may comprise suitable circuitry, logic and/or code that may enable encryption or randomization of the watermark data 515 utilizing the secret key 517. The encryption block 505 may generate an output signal that may be communicatively coupled to the data transform block 507. In another embodiment of the invention, the encryption block 505 may be disabled and the watermark data 515 may be communicated directly to the data transform block 507.

The data transform block 507 may comprise suitable circuitry, logic and/or code that may enable transforming of data to a form such that it may be inserted into a compressed video stream. The data transform block 507 may be communicatively coupled to the data embedding block 609 in the embedded CPU 503.

The embedded CPU 503 may comprise the data embedding block 509, a data classification and selection block 511 and a data merging block 513. The data embedding block 509 may comprise suitable circuitry, logic and/or code that may enable embedding of watermark data into a compressed video stream. The data embedding block 509 may receive as inputs, the data transformed watermark data from the data transform block 507 and the output signal of the data classification and selection block 511.

The data classification and selection block 511 may comprise suitable circuitry, logic and/or code that may enable classifying and selecting data from a received video stream to determine at what frequency and/or what data may require a watermark to be embedded. In this manner, a watermark may be embedded in a video stream without causing visible artifacts of the watermark. The data classification and selection block 511 may receive as an input, a video signal from a video encoder, such as the VLC block 217 described with respect to FIG. 2.

The data embedding block 509 may comprise suitable circuitry, logic and/or code that may enable embedding watermark data into a video stream. The data embedding block 509 may receive as inputs, a watermark communicated from the security processor 501 via the data transform block 507 and the video data from the data classification and selection block 511.

The data merging block 513 may comprise suitable circuitry, logic and/or code that may enable merging of the signal that did not require watermarking with the video signal that did receive a watermark in the data embedding block 509.

In operation, the watermark data 515 may be encrypted by the encryption block 505 utilizing the secret key 517. The encrypted watermark data may be communicated to the data transform block 507. The data transform block 507 may transform a data signal over a discrete time frame to result in a signal spread out over frequency, such that it may be very difficult for a hacker to remove it when embedded into a video signal. The data transformed signal may be communicated to the data embedding block 509 in the embedded CPU 503.

The video signal received from the video encoder/transcoder, such as the compression encoder/transcoder 201, described with respect to FIG. 2, may be received by the data classification and selection block 511 and may determine where in the video data the watermark may be embedded. The section of the video data to be embedded may be communicated to the data embedding block 509 where the watermark may be embedded into the data.

In instances where the video signal received by the data classification and selection block 511 may be compressed, Path 2 may be followed, such that the data merging block 513 may be bypassed. In instances where the video signal received by the data classification and selection block 511 may be uncompressed, Path 1 may be followed and the watermark embedded may be merged with the data communicated directly to the data merging block 513 from the data classification and selection block 511. The resulting merged video stream may be communicated back to a video decoder, such as the VLC block 217, described with respect to FIG. 2. This data path may be indicated by Path 1 in FIG. 5 and FIG. 2.

FIG. 6 is a block diagram of an exemplary watermark extractor, in accordance with an embodiment of the invention. Referring to FIG. 6, there is shown a watermark extractor 303 comprising an embedded CPU 601 and a security processor 603. There is also shown a secret key 613 and watermark data 615. The embedded CPU 601 may comprise a data extraction block 605 and a data separation block 607. The security processor 603 may comprise the data transform block 609 and the decryption block 611.

The data separation block 607 may comprise suitable circuitry, logic and/or code that may enable separating data in a video signal received from a video decoder, such as the VLD block 305, described with respect to FIG. 3. Portions of the video signal that comprise a watermark may be separated for watermark extraction by the data extraction block 605.

The data extraction block 605 may comprise suitable circuitry, logic and/or code that may enable extracting watermark data from data separated from a video stream by the data separation block 607. In another embodiment of the invention, the data extraction block 605 may receive compressed video directly in instances where the watermark may have been inserted directly onto compressed data, as illustrated by Path 2 in FIG. 6 and FIG. 2.

The data transform block 609 may comprise suitable circuitry, logic and/or code that may enable transforming data from a form suitable for embedding in a video stream to that for extracting the original watermark data, such as the watermark data 515, described with respect to FIG. 5.

The decryption block 611 may comprise suitable circuitry, logic and/or code that may enable decryption of transformed watermark data from the data transform block 609. The decryption block 611 may utilize the secret key 613 to generate the watermark data 615. In instances where the watermark insertion and extraction are successful, the watermark data 615 may be equal to the watermark data 515, described with respect to FIG. 5.

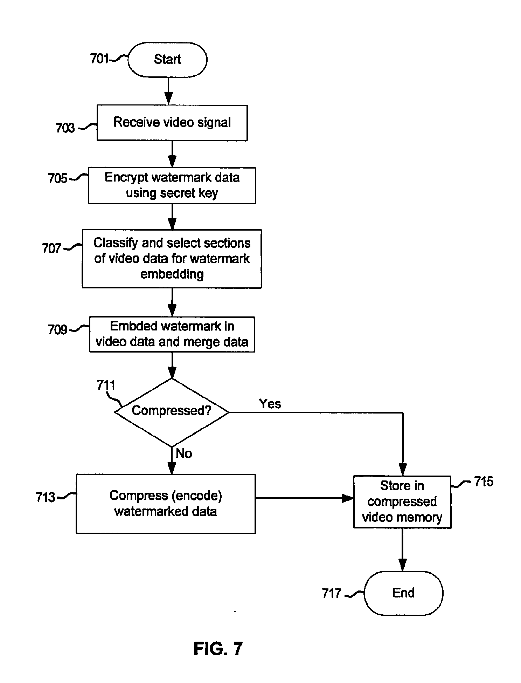

FIG. 7 is a flow diagram of an exemplary watermarking embedding process, in accordance with an embodiment of the invention. In step 703, after start step 701, the video signal may be received. In step 705, the watermark data may be encrypted using a secret key, followed by step 707 where sections of the video data may be classified and selected for watermark embedding. In step 709, the watermark may be embedded in the selected data and then merged with the data that may not have been watermarked. In step 711, in instances where the watermarked video data may already be compressed, the exemplary steps may skip to step 715 where it may be stored in the compressed video memory. In instances where the watermarked video data may not be compressed, the watermarked data may be compressed by a video compression/decompression engine before proceeding to step 715 where it may be stored in the compressed video memory followed by end step 717.

In an embodiment of the invention, a method and system are disclosed for embedding a watermark in a video signal 221 utilizing an embedded CPU 405. The embedded CPU 405 may be controlled utilizing a security processor 403 via a secure bus 411. The watermark 515 may be embedded in a compressed video signal that may be diverted around a compression/decompression engine 407. The watermark 515 may be embedded in a decompressed video signal and may be directed through a compression/decompression engine 407. Requests may be sent to the embedded CPU 405 from the main CPU 401 via the security processor 403 and the secure bus 411. The watermark 515 may be encrypted utilizing the security processor 403. The secure bus 411 may be inaccessible to the main CPU 401 or any device not on the chip. The chip may be disabled when the embedded CPU 405 may be disabled. Sections of the video signal may be classified and selected for embedding.

Certain embodiments of the invention may comprise a machine-readable storage having stored thereon, a computer program having at least one code section for digital media processing, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

**Claims**

1. A method for digital media processing, the method comprising:

   in a watermark system chip comprising a main CPU, an embedded CPU and a security processor:

   embedding a watermark in a video signal utilizing said embedded CPU; and
   controlling said embedded CPU utilizing said security processor via a secure bus.

2. The method according to claim 1, comprising embedding said watermark in a compressed video signal.

3. The method according to claim 2, comprising diverting said watermarked compressed video signal around a compression/decompression engine.

4. The method according to claim 1, comprising embedding said watermark in a decompressed video signal.

5. The method according to claim 4, comprising directing said watermarked decompressed video signal through a compression/decompression engine.

6. The method according to claim 1, comprising sending requests to said embedded CPU from said main CPU via said security processor and said secure bus.

7. A system for digital media processing, the system comprising:

   a watermark system chip comprising a main CPU, an embedded CPU and a security processor;
   said embedded CPU embeds a watermark in a video signal; and
   said security processor controls said embedded CPU via a secure bus.

8. The system according to claim 7, wherein said watermark system chip embeds said watermark in a compressed video signal.

9. The system according to claim 8, wherein said watermark system chip diverts said watermarked compressed video signal around a compression/decompression engine.

10. The system according to claim 7, wherein said watermark system chip embeds said watermark in a decompressed video signal.

FIG. 1

FIG. 2

200

Watermark Data
219

Secret Key
223

Watermark Embedder - 203

Path 2

Path 1

Original Video
221

204

Compression Encoder/Transcoder – 201

DCT
205

Q
209

Q⁻¹
211

DCT⁻¹
213

215

Prediction
207

VLC
217

225

Compressed Video (with embedded Watermark)

Secret Key — 321

Watermark Extraction - 303

Watermark Data

317

Path 1

Path 2

Compressed Video — 315

Decoded Video — 319

311

Prediction 313

DCT⁻¹ 309

Q⁻¹ 307

VLD 305

Decompression Engine – 301

300

FIG. 3

Chip - 400

Main CPU
401

Security
Processor
403

411

Secure
bus

Embedded
CPU
405

Video
(De)compression
Engine - 407

413

Video
bus

Memory Region for
Compressed Video - 409

FIG. 4

EP 2 068 566 A2

203

Secret Key

~517

Watermark
Data

515

Security Processor - 501

Encryption
505

Data
Transform
507

Embedded CPU - 503

Data Embedding
509

Path 1

Data
Classification and
Selection - 511

Data
Merging
513

Path 2

To/from Video Encoder/Transcoder

**FIG. 5**

14

303

Embedded CPU - 601

Data
Extraction
605

Path 2

Path 1

Data
Separation
607

Video

From
Video Decoder

Secret Key

613

Data
Transform
609

Decryption
611

615

Watermark
Data

Security Processor - 603

EP 2 068 566 A2

15

FIG. 6

EP 2 068 566 A2

701 — ( Start )

703 — Receive video signal

705 — Encrypt watermark data using secret key

707 — Classify and select sections of video data for watermark embedding

709 — Embded watermark in video data and merge data

711 — ◇ Compressed? ◇ —— Yes

No

713 — Compress (encode) watermarked data —→ Store in compressed video memory — 715

717 — ( End )

**FIG. 7**